(19) Europäisches Patentamt
European Patent Office
Office européen des brevets

(11) **EP 2 138 950 B1**

(12) **EUROPEAN PATENT SPECIFICATION**

(45) Date of publication and mention
of the grant of the patent:
**13.10.2010 Bulletin 2010/41**

(51) Int Cl.:
***G06K 9/00*** (2006.01)

(21) Application number: **08159036.6**

(22) Date of filing: **25.06.2008**

(54) **Iris feature extraction, identification and verification system based on directionlets**

System zur Extraktion, Identifizierung und Überprüfung von Irismerkmalen auf der Basis von Directionlets

Extraction de fonction d'iris, système d'identification et de vérification basé sur des directionlets

(84) Designated Contracting States:
**AT BE BG CH CY CZ DE DK EE ES FI FR GB GR HR HU IE IS IT LI LT LU LV MC MT NL NO PL PT RO SE SI SK TR**

(43) Date of publication of application:
**30.12.2009 Bulletin 2009/53**

(73) Proprietor: **Deutsche Telekom AG**
**53113 Bonn (DE)**

(72) Inventor: **Velisavljevic, Vladan**
**53113 Bonn (DE)**

(74) Representative: **2K Patentanwälte Blasberg Kewitz & Reichel**
**Partnerschaft**
**Corneliusstraße 18**
**60325 Frankfurt am Main (DE)**

(56) References cited:
**WO-A-2007/118079**

• **JASON THORNTON ET AL: "An Evaluation of Iris Pattern Representations" BIOMETRICS: THEORY, APPLICATIONS, AND SYSTEMS, 2007. BTAS 2007. FIRST IEEE INTERNATIONAL CONFERENCE ON, IEEE, PI, 1 September 2007 (2007-09-01), pages 1-6, XP031189939 ISBN: 978-1-4244-1596-0**
• **CHUL-HYUN PARK ET AL: "Extracting and Combining Multimodal Directional Iris Features" ADVANCES IN BIOMETRICS LECTURE NOTES IN COMPUTER SCIENCE;;LNCS, SPRINGER, BERLIN, DE, vol. 3832, 1 January 2005 (2005-01-01), pages 389-396, XP019026904 ISBN: 978-3-540-31111-9**

**Description**

**Field of the Invention**

The present invention relates to recognition of human irises in personal identification systems. These systems are used in biometric security applications, like border-crossing control, immigration control using passports with biometric data records, multiple identity search or door access control. The main tasks of the iris recognition systems are to provide a compact representation of iris images (i.e. to encode the captured image information) and to allow for a reliable comparison between pairs of the encoded iris images denying impostors and accepting genuine subjects.

**Background of Invention**

Biometric security systems have recently become very popular with the increasing need for higher security levels. These systems aim to precisely identify individuals using their various physiological characteristics.

Among many biometric methods, iris recognition is an active topic because of reliability and an easy non-invasive capturing technique. Iris, an annular region of human eye between the black pupil and the white sclera, has a very complex structure that is unique for each individual and each eye. As stated in Flom et al, "Iris recognition system", Patent No. US 4,641,349, Feb. 3, 1987, in Daugman, "Biometric personal identification system based on iris analysis", Patent No. US 5,291,560, Mar. 1, 1994, and in Wildes et al, "Automated, non-invasive iris recognition system and method", Patent No. US 5,751,836, May 12, 1998, the randomness of the human iris texture is ensured by the individual differences in development of the anatomic structure of eyes. Furthermore, the iris texture is stable over a life-span and is externally visible, which makes the process of identification easy and quick. All these properties allow for a convenient application of iris recognition methods in biometric security systems.

After the pioneering work of Flom et al, several researchers have proposed different solutions to the problem of iris recognition. One of the most remarkable is the work published in Daugman, "High confidence visual recognition of persons by a test of statistical independence", IEEE Trans. on Pattern Analysis and Machine Intelligence, vol. 15, pp. 1148-1161, Nov. 1993, and a recent development in Daugman, "Statistical richness of visual phase information: update on recognizing persons by iris patterns", Int. Journal on Computer Vision, vol. 45, no. 1, pp. 25-38, 2001, where multiscale Gabor filters are used to extract the phase information of irises. However, even though this method achieves outperforming results, it suffers from a high computational complexity because of active contours used to extract precisely iris regions and also because of the two-dimensional (2D) Gabor filtering.

In Wildes et al, "Iris recognition: an emerging biometric technology", Proc. of the IEEE, vol. 85, pp. 1348-1363, Sep. 1997, a Laplacian pyramid is used to decompose the iris texture and to represent it using a feature vector. However, this method also has a high computational complexity because of a non-trivial image registration used to align two different iris samples for the purpose of comparison. Moreover, the corresponding iris feature vectors are long, which makes the representation inefficient.

The method proposed in Boles et al, "A human identification technique using images of the iris and wavelet transform", IEEE Trans. on Signal Processing, vol. 46, pp. 1185-1188, Apr. 1998, reduces significantly the computational complexity by applying the one-dimensional (1D) wavelet transform (WT) on concentric circles taken from iris images. However, the feature vectors obtained using the zero-crossing representation of the circular wavelet coefficients consist of unbounded real numbers and are inconvenient for binary encoding. Similarly, the approach explained in Ma et al, "Efficient iris recognition by characterizing key local variations", IEEE Trans. on Image Processing, vol. 13, no. 6, June 2004, also exploits a set of 1D WTs applied on a normalized iris image along the angular direction. The feature vectors contain descriptions of neighbor extremum points in the transform coefficients and, thus, have variable lengths.

An importance of capturing directional (radial and angular) information in iris images has been noticed and exploited in Park et al, "Iris-based personal authentication using a normalized directional energy feature", Proc. 4th Int. Conf. Audio- and Video-Based Biometric Person Authentication, pp. 224-232, 2003, where a directional filter-bank is applied to a band-pass filtered iris image to extract feature vectors. These feature vectors are compared using the Euclidean distance to identify or verify subjects.

In Thornton et al. "An Evaluation of Iris Pattern Representations" ISBN 978 1 4244 1596 (document D1 in the search report), Section III-B. "discrimination Results" and also Section IV. "Gabor Filter-Bank Optimization", the implemented oriented wavelet transform consists of the Gabor wavelets. This transform is complex and different in the construction (e.g. in J. G. Daugman, "Uncertainty Relation for Resolution in Space, Spatial Frequency, and Orientation Optimized by Two-Dimensional Cortical Filters," J. Optical Soc. Am., vol. 2, no. 7, pp. 1160-1169, 1985) as compared to directionlets, which are real, separable and based on (any) 1D wavelet filter-bank. For that reason, the method and system proposed in this application are distinguishing, when compared to the same based on the Gabor wavelets.

Furthermore, the same Gabor wavelets are used in WO 2007/118079, "Methods and Systems for Optic Nerve Head Segmentation".

Finally, in Park et al. "Extracting and Combining Multimodal Directional Iris Features" ISBN 978-3-540-3111-9, the directional filter-bank is based on a wedge-shaped directional band-pass decomposition implemented using a lifting scheme, as explained in the reference [5] in the document. By contrast, directionlets are implemented using a transform in the direct spatial domain (no lifting scheme) and, thus, the subsampling lattice is also oriented.

In this invention, directional information in iris images is also exploited and it is captured using a directional WT, called directionlets, that has been previously proposed in Velisavljevic et al, "Directionlets: anisotropic multi-directional representation with separable filtering", IEEE Trans. on Image Processing, vol. 15, no. 7, pp. 1916-1933, July 2006. This transform provides an efficient representation of elongated and oriented features in images (like edges or contours) and, at the same time, retains the separability and simplicity of the standard WT. For that reason, directionlets are used in this invention for feature extraction from iris images and for the comparison processes.

## Summary of Invention

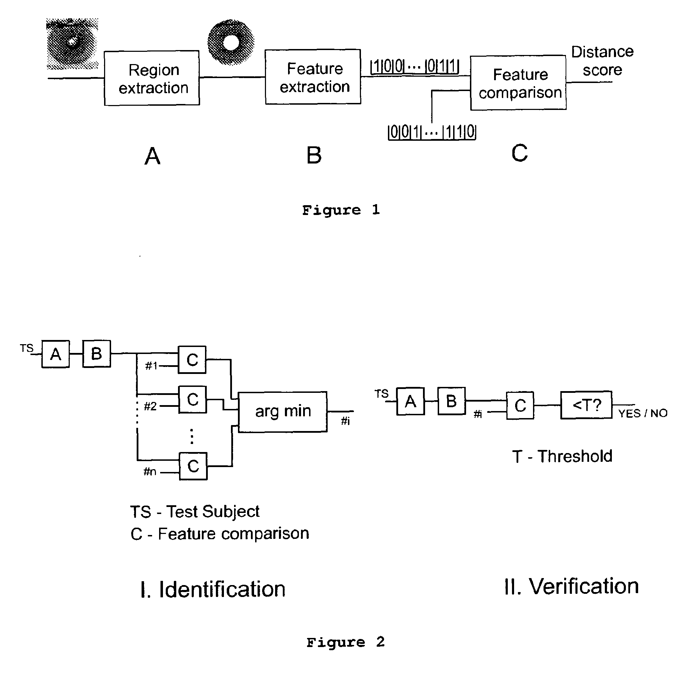

The objectives of the proposed method are to extract features from iris images, to represent them using a binary code and to allow for a reliable comparison. The method consists of three blocks, as illustrated in Figure 1:

> A. Region extraction,
> B. Feature extraction,
> C. Feature comparison.

The task of the block A is to locate the iris in the image. The block B generates a binary code for the located iris region given a code length. Finally, the block C computes a distance score between two iris binary codes. The iris region extraction method used in the block A is inherited from Daugman with few modifications, whereas the novel method based on directionlets is used in the last two blocks B and C.

The iris comparison process is implemented within the two functionalities (see also Figure 2):

> I. Identification - a tested iris image is compared to all iris codes stored in a database and the entry with the minimal distance score determines the identity of the test subject,
> II. Verification - a tested iris image is compared to the corresponding database entry and if the computed distance score is below a threshold, the test subject is declared genuine; otherwise it is declared impostor.

Similarly to the other iris recognition methods, the novel method based on directionlets has three invariance properties:

> 1) Shift-invariance - an invariance to the position of iris in the image,
> 2) Size-invariance - an invariance to the size of iris in the image,
> 3) Rotation-invariance - an invariance to the rotation of the iris region.

Apart from these common properties, the novel method has the following key characteristics that make it different as compared to the previously proposed approaches:

> 4) An oriented separable WT is used to capture the radial and angular information from iris images in the original domain directly across image pixels without a need for interpolation at non-integer coordinates,
> 5) The overall computational complexity of all the three blocks of the method is kept low,
> 6) A short fixed-length binary code is provided for each iris image. Moreover, the length of the code can be scaled allowing for an adaptive precision of iris representation and a trade-off between computational complexity and comparison reliability.

## Brief Description of Drawings

> Fig. 1 shows the three blocks of the method: the region extraction, feature extraction and feature comparison;
> Fig. 2 shows the two functionalities of the method: identification and verification;
> Fig. 3 shows the parameters of the location of iris region;
> Fig. 4 shows the contours of integration in different phases of the iris localization process;
> Fig. 5 shows the regions of directional subbands used in the sampling of iris images;

**Detailed Description of Invention**

As mentioned in the previous section, the method consists of the three blocks: A. region extraction, B. feature extraction and C. feature comparison. The blocks B and C use a novel approach based on directionlets, whereas the block A exploits the previously proposed region extraction by Daugman with several modifications. All the blocks are explained in detail next.

A. Iris region extraction

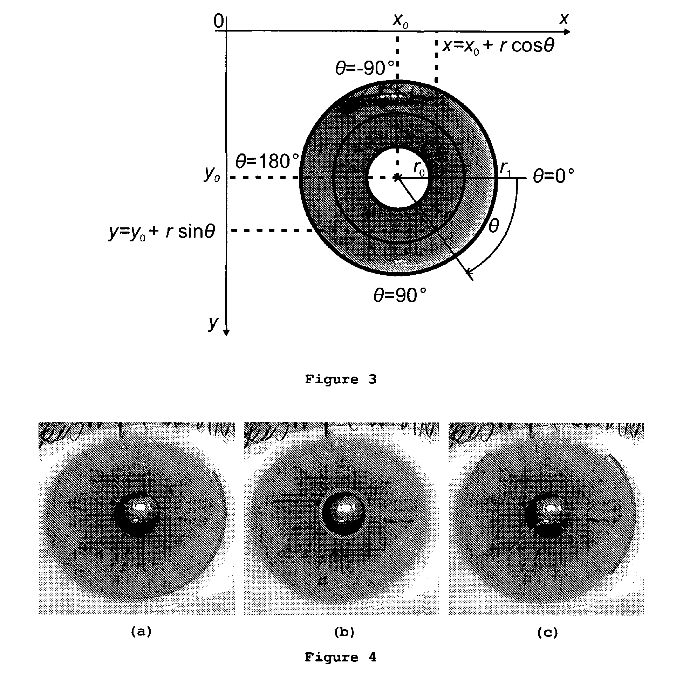

The iris region extraction method proposed in Daugman, "High confidence visual recognition of persons by a test of statistical independence", IEEE Trans. on Pattern Analysis and Machine Intelligence, vol. 15, pp. 1148-1161, Nov. 1993, makes an assumption that the iris region is perfectly annular, that is, it is bounded by two concentric circles: the border with the pupil (the inner border) and the border with the sclera (the outer border). Thus, the location of an iris region is estimated by four parameters: the location $(x_0, y_0)$ of the center of the iris (but also the center of the pupil and sclera), the inner radius $r_0$ and the outer radius $r_1$ (see Figure 3). Since the pupil and sclera are the darkest and the brightest regions in the image, respectively, the method searches for a maximal change of intensity of the circular integral across a smoothed version of the image $z(x,y)$ to estimate the four parameters. The image is first smoothed by a 2D Gaussian filter with a scale factor $\sigma$ and, then, the circular integral is computed as

$$I(r, x_0, y_0) = \frac{1}{2\pi r} \oint_{C(r, x_0, y_0)} z(x(r, \theta), y(r, \theta)) d\theta , \qquad (1)$$

where $x(r, \theta) = x_0 + r\cos\theta$ and $y(r, \theta) = y_0 + r\sin\theta$ are expressed using a polar coordinate system and the contour $C(r, x_0, y_0)$ is defined by $\{(x(r, \theta), y(r, \theta)) | 0 \leq \theta < 2\pi\}$. The sclera border is found as an integration contour that provides the strongest transition in the intensity of (1), using

$$\left(r_1^*, x_0^*, y_0^*\right) = \arg \max_{(r, x_0, y_0)} \frac{\partial}{\partial r} I(r, x_0, y_0) , \qquad (2)$$

where a coarser scale factor $\sigma$ is used in the smoothing process. Then, the search in (2) is repeated with a finer scale of smoothing to refine the center location and to estimate the radius of the pupil border. The repeated search results in the final estimation $(x_0^*, y_0^*)$ and $r_0^*$.

Since the iris localization process involves continuous operators, a discretization is required for application in a discrete image domain. The task of discretization is non-trivial and it can lead to instability or wrong localization results. Daugman proposed a discretized approximation of the circular integral (1) and the partial differentiation across the radius r in (2). However, this approximation still involves two 2D Gaussian filtering operations and an exhaustive search for the optimal parameters across three dimensions used in (2). Therefore, the overall computational complexity is high and a practical implementation of the method is inefficient.

In this invention, a modified Daugman's method is used, where the modifications are made to reduce the computational complexity and to alleviate the discretization process. The Gaussian filtering is applied only once (unlike in the original algorithm) with a chosen value for the scale factor $\sigma$, where the corresponding discretized Gaussian filter is obtained by sampling at integer coordinates and truncation to a $3\sigma$ neighborhood. The choice of $\sigma$ depends on the image resolution. All the four iris region parameters are then estimated from the Gaussian-filtered version of the original image.

Estimation of the parameters is implemented in four phases: 1) coarse localization of sclera, 2) coarse localization of pupil, 3) fine localization of pupil and 4) fine localization of sclera.

1) In coarse localization of the sclera border, $r$, $x_0$ and $y_0$ are sparsely sampled to reduce the computational complexity of the maximization in (2). In this process, the integration contour $C$ covers only the bottom 2/3 of the circle, that is, $C$ is defined as $\{(x(r, \theta), y(r, \theta)) | -\pi/6 \leq \theta < 7\pi/6\}$, to avoid eyelid and eyelash occlusion (as shown in Figure 4a). The maximization in (2) results in the first-order estimates $r_1^*$, $x_0^*$ and $y_0^*$.

2) The integration and maximization are repeated within bounded intervals for $r$, $x_0$ and $y_0$, which are again sparsely sampled and chosen so that the maximal value in (2) corresponds to the pupil border. The integration contour is circular, like in the original method, because the eyelid and eyelash occlusion is unlike at pupil (see Figure 4b). The resulting parameters are the first-order estimate of the inner radius $r_0^*$ and refined estimates $x_0^*$ and $y_0^*$.

3) New integration and maximization are performed at a single pixel precision of the parameters $r$, $x_0$ and $y_0$ within intervals bounded around the previously computed $r_0^*$, $x_0^*$ and $y_0^*$. The integration contour is again a full circle. This process provides final estimates $r_0^*$, $x_0^*$ and $y_0^*$.

4) Finally, the outer radius is estimated at a single pixel precision of r by integration over the contours C defined as $\{(x(r,\theta),y(r,\theta))|(-\pi/4 \leq \theta < \pi/4) \cup (3\pi/4 \leq \theta < 5\pi/4)\}$ to focus only on the pronounced transition areas between iris and sclera (see Figure 4c). The interval of $r$ is bounded around the previous first-order estimate of the outer border. This phase gives a final estimate $r_1^*$.

In the discretized approximation of the arc and circular integration processes, the coordinates of the coefficients are always rounded to the nearest integer values to prevent interpolation at fractional coordinates. This rounding process avoids an additional computational complexity required for the interpolation. Furthermore, the estimation implemented through phases reduces the overall computational complexity needed for the exhaustive search across all the three dimensions $r$, $x_0$ and $y_0$. Finally, an adaptive localization of the iris center and borders allows for shift- and size-invariant processing of the iris samples.

B. Iris feature extraction

The iris feature extraction method analysis the iris region extracted from the image in the block A and generates a binary code of a fixed predetermined length. The method is based on oriented wavelet transforms, called directionlets, which are reviewed next.

Directionlets have been proposed in Velisavljevic et al, "Directionlets: anisotropic multi-directional representation with separable filtering", IEEE Trans. on Image Processing, vol. 15, no. 7, pp. 1916-1933, July 2006, as basis functions of the skewed asymmetric multiscale wavelet transforms. These transforms are built across integer lattices, where purely 1D filtering and subsampling operations are performed along vectors with orientations that are not necessarily horizontal or vertical. Such a filtering operation using a high-pass wavelet filter imposes directional vanishing moments along the chosen directions and allows for efficient capturing of directional features in images. At the same time, directionlets retain the conceptual and computational simplicity from the standard WT involving only separable 1D operations. The transforms are successfully applied in image representation, non-linear approximation and also compression, as explained in Velisavljevic et al. "Space-frequency quantization for image compression with directionlets", IEEE Trans. on Image Processing, vol. 16, no. 7, pp. 1761-1773, July 2007.

An undecimated version of directionlets is used in the feature extraction method. This version is obtained by applying only filtering (without subsampling) using a biorthogonal 9/7 wavelet filter-bank (proposed in Antonini et al. "Image coding using wavelet transform", IEEE Trans. on Image Processing, vol. 1, no. 2, pp. 205-220, Apr. 1992). The resulting redundant representation of the iris image is shift-invariant and the analysis is more robust in a noisy environment.

The extraction' algorithm consists of the three phases: (1) filtering (or transforming) the original iris image using the 9/7 wavelet filter-bank, (2) sampling the wavelet coefficients at specified sampling coordinates and (3) generating a binary code.

1) Two classes of transforms are combined in this phase: smoothing and directional filtering. The smoothing filtering consists of a pair of low-pass transforms applied along the horizontal and vertical directions, whereas the directional filtering is one step of high-pass filtering along a direction $\alpha \in \{0°, 90°, 45°, -45°\}$. The smoothing filtering is applied on the iris image as a multiscale decomposition with four levels. The directional filtering is applied only on the third and fourth level of the multiscale decomposition because the first two levels are too sensitive to noise in the original image. Such a transform results in eight directional subbands denoted as $d_{a,s}(x,y)$, where $s \in \{3, 4\}$, and these subbands are sampled further in the next phase.

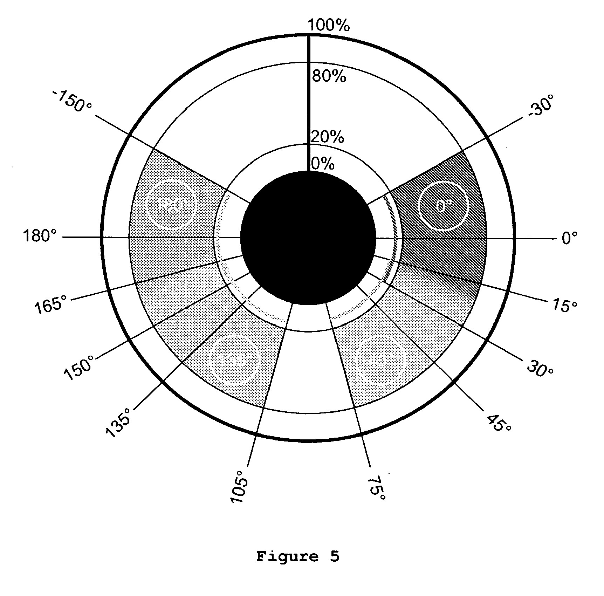

2) The directional subbands $d_{a,s}$ are sampled so that the retained coefficients represent oriented features in the iris along both radial and angular directions. The coefficients are sampled from 4 regions within the iris bounded by two concentric circles with the radii at 20% and 80% of the iris annulus and with the angular width equal to 60° centered at the directions 0°, 180°, 45° and 135°, respectively (see Figure 5). The upper area of the iris and also the areas close to the pupil and sclera are not used for sampling because of possible light reflection and occlusion by eyelids and eyelashes. The coefficients are grouped in 16 clusters denoted as $W_{k,s,o}(i,j)$ and indexed by the region $k \in \{0°, 180°, 45°, 135°\}$, the transform orientation $o \in \{rad, ang\}$ and the scale $s \in \{3, 4\}$. The sampling process is defined by $W_{k,s,o}(i,j) = d_{a,s}(x(i,j),y(i,j))$, where the index $\alpha$ is chosen according to Table I, and the coordinates $x(i,j)$ and $y(i,j)$ are rounded to the nearest integer to prevent interpolation at non-integer locations. The directional subbands are sampled uniformly in the polar coordinate system, that is, $x(i,j) = x_0 + r_i \cos\theta_j$ and $y(i,j) = y_0 + r_i \sin\theta_j$, where

$$r_i = r_0 + 0.2\Delta_r + 0.6\Delta_r \cdot \frac{i}{I_{s,o} - 1} \ , \quad i = 0,\ldots,I_{s,o} - 1 \ ,$$

$$\theta_j = \theta_k^* + \frac{\pi}{3} \cdot \frac{j}{J_{s,o} - 1} \ , \quad j = 0,\ldots,J_{s,o} - 1$$

and $\Delta_r = r_1 - r_0$. The parameters $I_{s,o}$ and $J_{s,o}$ determine the number of samples along the radial and angular axes, respectively, and the border angle $\theta_k^* = k - 30°$. Even though the parameters $I_{s,o}$ and $J_{s,o}$ are chosen arbitrarily, good results are achieved for $I_{3,o} = 2 \cdot I_{4,o}$ and $J_{3,o} = 2 \cdot J_{4,o}$ because of the properties of the wavelet multiscale decomposition.

**Table I**

| $k$ | 0° | 0° | 180° | 180° | 45° | 45° | 135° | 135° |
|---|---|---|---|---|---|---|---|---|
| $o$ | rad | ang | rad | ang | rad | ang | rad | ang |
| $\alpha$ | 0° | 90° | 0° | 90° | 45° | -45° | -45° | 45° |

3) The generated binary code consists of signs of the retained coefficients $W_{k,s,o}(i,J)$, that is, for each retained value, the corresponding bit is determined by

$$b_{k,s,o}(i,j) = \begin{cases} 1, W_{k,s,o}(i,j) \geq 0 \\ 0, W_{k,s,o}(i,j) < 0 \end{cases} . \tag{3}$$

The resulting binary code contains all the bits from (3) for $k \in \{0°, 180°, 45°, 135°\}$, $s \in \{3, 4\}$ and $o \in \{rad, ang\}$ concatenated sequentially. The length of the code does not depend on the content or the resolution of the iris image and it is given by

$$\sum_{k,s,o} I_{s,o} \cdot J_{s,o} = \sum_{s,o} 4 \cdot I_{s,o} \cdot J_{s,o} \ .$$

The parameters $I_{s,o}$ and $J_{s,o}$ allow for a trade-off between the iris comparison reliability and computational complexity. Such a code is easily stored and compared using fast binary operations and it is reliable ensuring a trustworthy identification, as explained next.

C. Iris feature comparison

Given two binary codes generated from two iris images in the blocks A and B with equal parameters $I_{s,o}$ and $J_{s,o}$, the block C calculates a distance score. The bits in the two binary codes are compared using the Boolean exclusive OR operator (XOR or $\oplus$) and the distance score is computed as a sum of the results of the XOR operations across the region $k$, scale $s$ and orientation $o$. To ensure rotation invariance, the distance within each region is computed for different relative angles of rotation of the two iris images, which corresponds to angular shift in the binary code, and the minimum is taken as the distance score $D_{12}(k,s,o)$.

More precisely, for two iris codes $b_{k,s,o}^{(1)}(i,j)$ and $b_{k,s,o}^{(2)}(i,j)$, the distance score $D_{12}(k,s,o)$ is computed as

$$D_{12}(k,s,o) = \min_{0 \le c_1 \le \Delta_{s,o}, 0 \le c_2 \le \Delta_{s,o}} \sum_{i=0}^{I_{s,o}-1} \sum_{j=0}^{J_{s,o}-\Delta_{s,o}-1} \left( b_{k,s,o}^{(1)}(i,j+c_1) \oplus b_{k,s,o}^{(2)}(i,j+c_2) \right). \qquad (4)$$

The total distance score is given by a sum of all $D_{12}(k,s,o)$, that is,

$$D_{12} = \sum_{k \in \{0°,90°,45°,135°\}} \sum_{s \in \{3,4\}} \sum_{o \in \{rad,ang\}} D_{12}(k,s,o). \qquad (5)$$

Notice that the smaller the distance score in (5) is, the more similar the iris images are. In case of self-distance, where an iris image is compared to itself, $D_{12} = 0$.

The maximal relative rotation shift that can be compensated using (4) is $\pm \frac{1}{2}\Delta_{s,o}$. The parameters $\Delta_{s,o} < J_{s,o}$ can be chosen arbitrarily, but good results are achieved for $\Delta_{s,o} = \frac{1}{2}J_{s,o}$.

D. Comparison functionalities

The iris codes are pair-wise compared and the distance scores are computed using (5) through two functionalities: I. identification and II. verification. In both functionalities, it is assumed that a database of iris code entries has been formed and a new test subject is compared to these entries. The tasks of both functionalities are explained next and shown in Figure 2.

I. Identification: A test subject is pair-wise compared to all entries in the database and a set of distance scores is computed. The identity of the test subject is determined as the identity of the database entry that has a minimal distance score in the set.
II. Verification: A hypothesis on identity of a test subject is checked by comparison to the corresponding database entry. If the computed distance score is below a threshold, the test subject is accepted as a genuine subject; otherwise it is rejected as an impostor.

Notice that, in the first functionality, a false identity will be assigned to a possible impostor (a test subject without a corresponding entry in the database). To prevent this false matching, the two functionalities are concatenated so that the assigned identity in the identification process is tested in the verification process.

E: Properties and performance

As mentioned above, the entire iris recognition method is invariant to shift, size and rotation of the iris. These properties are revisited here.

1) Shift-invariance is ensured by the iris region extraction method in the block A. Translations of a position of the iris in the image are compensated by an adaptive estimation of the location $(x_0, y_0)$ of the pupil/iris center.
2) Size-invariance is also ensured by the iris region extraction method in the block A. Different size of both the inner and outer borders of the iris can be caused by anatomic factors (an individual size of the pupil and sclera, contraction of the circular muscles in the iris as a reaction to light intensity, etc.), but also by a variant distance from eyes to the camera. This variation is compensated by an adaptive estimation of the two radii of the iris borders $r_0$ and $r_1$.

3) Rotation-invariance is ensured by the iris feature comparison in the block C. A relative rotation shift between two iris images is compensated by a search for a minimal distance score over all possible relative rotation shifts within a given interval $\pm \frac{1}{2}\Delta_{s,o}$.

The other listed properties are also reviewed next.

4) Application of oriented transforms, directionlets, in the feature extraction method in the block B allows for capturing directional features in the iris images. The appropriate choice of transform orientations and sampling locations ensures that the directional features of the iris along both radial and angular directions are represented in the retained samples. Moreover, in the sampling process, only the coefficients at integer locations are kept to avoid interpolation at fractional coordinates.

5) The overall computational complexity of the method is reduced in each block. Namely, in the block A, the computationally expensive 2D Gaussian filtering is applied only once at a single scale σ and the exhaustive search for the optimal radius $r$ and the center location $(x_0, y_0)$ is divided into several phases with a gradually increasing resolution to decrease the total number of operations. Then, in the block B, a separable wavelet filtering is applied based on a short 1D filter-bank, the coefficients are sampled only at integer coordinates to prevent interpolation and the binary code is generated using a simple comparison operation. Finally, in the block C, a computationally cheap exclusive OR operation is used, which is still efficient, in spite of the additional search for the best compensation of the angular shift.

6) The length of the iris binary code is fixed and it does not depend on the content or resolution of the iris image, which is convenient for storage in a database and comparison among iris images taken by different cameras. Moreover, by tuning the parameters $I_{s,o}$ and $J_{s,o}$, the code length and the computational complexity are scaled and traded-off for the resolution of iris representation and recognition quality.

## Claims

1.  Method for automatic recognition of human irises in personal identification systems, using information obtained from an iris region extraction method, comprising the steps:

    - iris feature extraction, wherein a binary code is generated using directionlets;
    - iris feature comparison, wherein, based on the generated binary code, a distance score to other iris binary codes stored in a database is calculated and this score is used in the recognition process.

2.  The method according the previous claim, wherein the iris feature comparison comprises:

    - an identification step, wherein a test subject is pair-wise compared to all entries in the database and a set of distance scores is computed; then the identity of the test subject is determined as the identity of the database entry that has a minimal distance score in the set;
    - a verification step, wherein a hypothesis on identity of a test subject is checked by computing the distance score to the corresponding database entry and comparing it to a threshold; if the computed distance score is below a threshold, the test subject is accepted as a genuine subject; otherwise it is rejected as an impostor.

3.  The method according one or more of-the previous claims, wherein an undecimated version of directionlets is used in the feature extraction method, which is obtained by applying only filtering using a biorthogonal 9/7 wavelet filter-bank without subsampling.

4.  The method according one or more of the previous claims, wherein the feature extraction step consists of the three phases:

    (1) filtering or transforming the original iris image using the 9/7 directional wavelet filter-bank,
    (2) sampling the wavelet coefficients at specified sampling coordinates and
    (3) generating a binary code.

**5.** The method according one or more of the previous claims, wherein the feature comparison comprises a Boolean exclusive OR operator $\oplus$. Given two binary codes generated from two iris images in the blocks A and B with equal parameters $I_{s,o}$ and $J_{s,o}$, the block C calculates a distance score as a sum of the results of the Boolean exclusive OR operations applied on the bits in the two binary codes across the region $k$, scale $s$ and orientation $o$.

**6.** The method according the previous claim, wherein, to ensure rotation invariance, the distance score within each region $k$, scale $s$ and orientation $o$ is computed for different relative angles of rotation of the two iris images, which corresponds to angular shift in the binary code, and the minimum is taken as the distance score $D_{12}(k,s,o)$.

**7.** The method according the previous claim, wherein for two iris codes $b_{k,s,o}^{(1)}(i,j)$ and $b_{k,s,o}^{(2)}(i,j)$, the distance score $D_{12}(k,s,o)$ within the region $k$, scale $s$ and orientation $o$ is computed as

$$D_{12}(k,s,o) = \min_{0 \le c_1 \le \Delta_{s,o}, 0 \le c_2 \le \Delta_{s,o}} \sum_{i=0}^{I_{s,o}-1} \sum_{j=0}^{J_{s,o}-\Delta_{s,o}-1} \left( b_{k,s,o}^{(1)}(i,j+c_1) \oplus b_{k,s,o}^{(2)}(i,j+c_2) \right)$$

and the total distance score is given by a sum of all $D_{12}(k,s,o)$, that is,

$$D_{12} = \sum_{k \in \{0°,90°,45°,135°\}} \sum_{s \in \{3,4\}} \sum_{o \in \{rad,ang\}} D_{12}(k,s,o) .$$

**8.** The method according one or more of the previous claims, wherein, the iris region extraction method is based on the Gaussian filtering applied only once on the iris image with a chosen value for the scale factor $\sigma$; the corresponding discretized Gaussian filter is obtained by sampling the continuous counter-part at integer coordinates and truncation to a $3\sigma$ neighbourhood; the choice of $\sigma$ depends on the image resolution.

**9.** The method according one or more of the previous claims, wherein an estimation of the iris region parameters is implemented in four phases:

    1) coarse localization of the border between the sclera and the iris,
    2) coarse localization of the border between the pupil and the iris,
    3) fine localization of the border between the pupil and the iris
    4) fine localization of the border between the sclera and the iris.

**10.** Identification system for automatic recognition of human irises, using information derived from an iris region extraction device, comprising the means:

    - iris feature extraction device, wherein a binary code is generated, based on directionlets;
    - iris feature comparison device, wherein, based on the generated binary code, a distance score to other iris binary codes stored in a database is calculated and, if the computed distance score is below a defined threshold, the recognition is positive.

**11.** The system according the previous system claim, wherein the iris feature comparison comprises:

    - identification means, wherein a test subject is pair-wise compared to all entries in the database and a set of distance scores is computed; the identity of the test subject is determined as the identity of the database entry that has a minimal distance score in the set;
    - verification means, wherein a hypothesis on identity of a test subject is checked by comparison to the corresponding database entry and, if the computed distance score is below a threshold, the test subject is accepted as a genuine subject; otherwise it is rejected as an impostor.

**12.** The system according one or more of the previous system claims, wherein the extraction step consists of the three means:

(1) filtering means or transforming to filter the original iris image using the directional 9/7 wavelet filter-bank,
(2) sampling means to sample the wavelet coefficients at specified sampling coordinates and
(3) generating means to generate a binary code.

13. The system according one or more of the previous system claims, wherein the feature comparison devices comprises calculation means to execute a Boolean exclusive OR operator $\oplus$ and the distance score is computed as a sum of the Boolean operations across the region $k$, scale $s$ and orientation $o$, in particular wherein given two binary codes generated from two iris images in the blocks A and B with equal parameters $I_{s,o}$ and $J_{s,o}$, the block C calculates a distance score, the bits in the two binary codes are compared using the Boolean exclusive OR operator $\oplus$ and the distance score is computed as a sum of the Boolean operations across the region $k$, scale $s$ and orientation $o$.

14. The system according the previous system claim, wherein to ensure rotation invariance, the distance within each region is computed for different relative angles of rotation of the two iris images, which corresponds to angular shift in the binary code, and the minimum is taken as the distance score $D_{12}(k,s,o)$.

15. The system according the previous system claim, wherein for two iris codes $b^{(1)}_{k,s,o}(i,j)$ and $b^{(2)}_{k,s,o}(i,j)$, the distance score $D_{12}(k,s,o)$ is computed as

$$D_{12}(k,s,o) = \min_{0 \le c_1 \le \Delta_{s,o}, 0 \le c_2 \le \Delta_{s,o}} \sum_{i=0}^{I_{s,o}-1} \sum_{j=0}^{J_{s,o}-\Delta_{s,o}-1} \left( b^{(1)}_{k,s,o}(i,j+c_1) \oplus b^{(2)}_{k,s,o}(i,j+c_2) \right)$$

the total distance score is given by a sum of all $D_{12}(k,s,o)$, that is,

$$D_{12} = \sum_{k \in \{0°,90°,45°,135°\}} \sum_{s \in \{3,4\}} \sum_{o \in \{rad, ang\}} D_{12}(k,s,o)$$

**Patentansprüche**

1. Verfahren zur automatischen Erkennung der menschlichen Iris durch Systeme zur persönlichen Identifizierung, die Informationen verwenden, die aus einem Verfahren zur Extrahierung der Irisregion gewonnen werden, bestehend aus folgenden Schritte:

   - Extrahierung von Irismerkmalen, wobei mittels Directionlets ein Binärcode erzeugt wird;
   - Vergleich von Irismerkmalen, wobei auf der Grundlage des erzeugten Binärcodes ein Abstandspunktwort zu anderen Iris-Einärcodes, die in einer Datenbank gespeichert sind, berechnet wird und dieser Punktwert im Erkennungsverfahren verwendet wird.

2. verfahren nach dem vorstehenden Anspruch, wobei der Vergleich der Iris-Merkmale Folgendes umfasst:

   - einen Identifizierungsschritt, wobei eine Versuchsperson paarweise mit allen Einträgen in der Datenbank verglichen und eine Menge an Abstandspunktwerten wird berechnet; dann die Identität der Versuchsperson als die Identität des Datenbankeintrags bestimmt wird, die einen minimalen Abstandspunktwert in der Menge besitzt;
   - einen Überprüfungsschritt, wobei eine Hypothese über die Identität einer Versuchsperson durch Berechnung des Abstandspunktnwerts zum entsprechenden Datenbankeintrag und Vergleich mit einem Grenzwert geprüft wird; wenn der berechnete Abstandspunktwert unter einem Grenzwert liegt, wird die Versuchsperson als echte Person akzeptiert, andernfalls als Identitätsfälscher zurückgewiesen.

3. Das Verfahren nach einem oder mehreren der vorstehenden Ansprüche, wobei im Merkmal-Extrahicrungsverfahren eine nicht dezimierte Fassung der Directionlets verwendet wird, die durch ausschließliche Anwendung des Filterns unter Verwendung einer biorthogonalen 9/7 Wavelet-Filterbank /ohne Heruntertaktung/ erzielt wird.

4. Das Verfahren nach einem oder mehreren der vorstehenden Ansprüche, wobei der Merkmalextrahierungsschritt aus drei Phasen besteht:

(1) Filtern zur Umformung des ursprünglichen Irisbilds mittels der 9/7 gerichteten Wavelet-Filterbank,
(2) Abtasten der Wavelet-Koeffizienten an festgelegten Abtastkoordinaten und
(3) Erzeugen eines Binärcodes.

5. Das Verfahren nach einem oder mehreren der vorstehenden Ansprüche, wobei der Merkmalsvergleich einen Booleschen ausschließlichen ODER-Operator ($\oplus$) umfasst, bei gegebenen zwei Binärcodes, die aus zwei Irisbildern in den Blöcken A und B mit gleichen Parametern $I_{s,o}$ und $J_{s,o}$ erzeugt wurden, berechnet der Block C einen Abstandspunktwert als Summe aus dem Ergebnis der Operationen mit Booleschem ausschließlichem ODER (XOR), angewendet auf die Bits in den beiden Binärcodes über die Fläche *k*, die Skala *s* und die Richtung *o*.

6. Das Vorfahren nach dem vorstehenden Anspruch, wobei zur Gewährleistung der Drehungsbeständigkeit der Abstandspunktwert in jeder Fläche k, Skala s und Richtung o für verschiedene relative Drehwinkel der beiden Irisbilder berechnet wird, was der Winkelverschiebung im Binärcode entspricht, und der Mindestwert als Abstandspunktwert $D_{12}(k,s,o)$ herangezogen wird.

7. Das Arbeitsverfahren nach dem vorstehenden Anspruch, wobei die beiden Iriscodes $b^{(1)}_{k,s,o}(i,j)$ und $b^{(2)}_{k,s,o}(i,j)$, der Abstandspunktwert $D_{12}(k,s,o)$ in der Fläche k, skala s und Richtung o berechnet wird als

$$D_{12}(k,s,o) = \min_{0 \le c_1 \le A_{s,o}, 0 \le c_2 \le A_{s,o}} \sum_{i=0}^{I_{s,o}-1} \sum_{j=0}^{J_{s,o}-1} \left( b^{(1)}_{k,s,o}(i,j+c_1) \oplus b^{(2)}_{k,s,o}(i,j+c_2) \right)$$

und der Genamtabstandspunktwert durch die Summe aller $D_{12}(k,s,o)$ gegeben ist, d. h.

$$D_{12} = \sum_{k \in \{0°,90°,45°,135°\}} \sum_{s \in [1,4]} \sum_{o \in \{rad,ang\}} D_{12}(k,s,o) .$$

8. Das Verfahren nach einem oder mehreren der vorstehenden Ansprüche, wobei das Irisflächen-Extrahierungsverfahren auf der Gauss-Filterung basiert, die nur einmalig auf das Irisbild mit einem gewählten Wert für den Skalierungsfaktor *o* angewendet wird; der entsprechende diskretisierte Gauss-Filter wird durch Abtastung des fortlaufenden Abbilds an ganzzahligen Koordinaten und Trunkierung zu einer 3o-Umgebung ormittelt; die Wahl von o hängt von der Bildauflösung ab.

9. Das Verfahren nach einem oder mehreren der vorstehenden Anspruche, wobei eine Schätzung der Irisflächenparameter in vier Phasen umgesetzt wird;

1) grobe Verortung der Grenze zwischen der Sklera und der Iris,
2) grobe Verortung der Grenze zwischen der Pupille und der Iris,
3) feine Verortung der Grenze zwischen der Pupille und der Iris,
4) feine Verortung der Grenze zwischen der Sklera und der Iris.

10. Identifizierungssystem zur automatischen Erkennung der menschlichen Iris anhand von Informationen, die aus einem Mittel zur Extrahierung der Irisfläche stammen, die folgende Mittel umfasst:

- Mittel zur Extrahierung von Irismerkmalen, wobei auf Basis von Directionlets ein Binärcode erzeugt wird;
- Mittel zum Vergleich von Irismerkmalen, wobei auf der Grundlage des erzeugten Binärcodes ein Abstandspunktwert zu anderen Iris-Binärcodes berechnet wird, die in einer Datenbank gespeichert sind, und sofern der berechnete Abstandrpunkzwert unter einem festgelegten Grenzwert liegt, die Erkennung positiv ist.

11. Das System nach dem vorausgehende Systemanspruch, wobei der Vergleich der Iris-Merkmale Folgendes umfasst:

- Identifizierungsmittel, wobei eine Versuchsperson paarweise mit allen Einträgen in der Datenbank verglichen und eine Menge an Abstandspunktwerten berechnet wird; die Identität der Versuchsperson wird als die Identität des Datenbankeintrags bestimmt, die einen minimalen Abstandspunktwert in der Menge besitzt;
- Überprüfungsmittel, wobei eine Hypothese über die Identität einer Versuchsperson durch Vergleich mit dem entsprechenden Datenbankeintrag geprüft wird; wenn der berechnete Abstandspunktwert unter einem Grenzwert liegt, wird die Versuchsperson als echte Person akzeptiert, anderenfalls als Identitätsfälscher zurückgewiesen.

**12.** Das System nach einem oder mehreren der vorstehenden Systemansprüche, wobei der Merkmalsextrahierungsschritt aus drei Mitteln besteht:

(1) Filtermittel oder Umformung zur Filterung des ursprünglichen Irisbilds mittels der 9/7 gerichteten Wavelot-Filterbank,
(2) Abtastmittel zur Abtastung der Wavclet-Koeffizienten an festgelegten Abtastkoordinaten und
(3) Erzeugungsmittel zur Erzeugung eines Binärcodes.

**13.** Das System nach einem oder mehreren der vorstehenden Systemansprüche, wobei die Mittel zum Merkmalsvergleich Berechnungsmittel zur Ausführung eins Booleschen ausschließlichen ODER-Operators ($\oplus$) beinhaltet und der Abstandspunktwert berechnet wird als Summe der Booleschen Operationen über die Fläche k, die Skala s und die Richtung o, wobei namentlich bei gegebenen zwei Binärcodes, die aus zwei Irisbildern in den Blöcken A und B mit gleichen Parametern $I_{s,o}$ und $J_{s,o}$ erzeugt werden, der Block C einen Alastandspunktwert berechnet, die Bits in den beiden Binärcodes anhand des Booleschen ausschließlichen ODER-Operators ($\oplus$) verglichen worden und der Absrandspunktwert als Summe der Booleschen Operationen über die Fläche $k$, die Skala $s$ und die Richtung $o$ berechnet wird.

**14.** Das System nach dem vorstehenden Systemanspruch, wobei zur Gewährleistung der Drehungsbeständigkeit der Abstandswert in jeder Fläche für verschiedene relative Drehwinkel der beiden Irisbilder berechnet wird, was der Winkelverschicbung im Binärcode entspricht, und der Mindestwert als Abstandspunktwert $D_{12}(k,s,o)$ herangezogen wird.

**15.** Das System nach dem vorstehenden Systemanspruch, wobei für zwei Iriscodes $b^{(1)}_{k,s,o}(i,j)$ und $b^{(2)}_{k,s,o}(i,j)$ der Abstandspunktwert $D_{12}(k,s,o)$ berechnet wird als

$$D_{12}(k,s,o) = \min_{0 \le c_1 \le \Delta_{s,o}, 0 \le c_2 \le \Delta_{s,o}} \sum_{i=0}^{I_{s,o}-1} \sum_{j=0}^{J_{s,o}-b_{s,o}-1} \left( b^{(1)}_{k,s,o}(i,j+c_1) \oplus b^{(2)}_{k,s,o}(i,j+c_2) \right)$$

und der Gesomtabstandspunktwert durch die Summe aller $D_{12}(k,s,o)$ gegeben ist, d. h.

$$D_{12} = \sum_{k \in \{0^\circ, 90^\circ, 45^\circ, 135^\circ\}} \sum_{s \in \{3,4\}} \sum_{o \in \{md, ant\}} D_{12}(k,s,o)$$

## Revendications

**1.** Procédé de reconnaissance automatique des iris de l'homme dans des systèmes d'identification personnelle, en utilisant des informations obtenues par un procédé d'extraction de région de l'iris, comprenant les étapes suivantes :

- extraction des caractéristiques de l'iris, dans laquelle un code binaire est généré en utilisant des directionlets ;
- comparaison des caractéristiques de l'iris, dans laquelle, sur la base du code binaire généré, un score de distance par rapport à d'autres codes binaires d'iris enregistrés dans une base de données est calculé et ce score est utilisé dans le processus de reconnaissance.

**2.** Procédé selon la revendication précédente, dans lequel la comparaison des caractéristiques de l'iris comprend :

- une étape d'identification, dans laquelle un sujet testé est comparé par paires à toutes les entrées de la base de données et un ensemble de scores de distance est calculé ; ensuite, l'identité du sujet testé est déterminée comme l'identité de l'entrée de base de données qui a un score de distance minimal dans l'ensemble,

- une étape de vérification, dans laquelle une hypothèse sur l'identité d'un sujet testé est vérifiée en calculant le score de distance par rapport à l'entrée de base de données correspondante et en le comparant à un seuil ; si le score de distance calculé est inférieur à un seuil, le sujet testé est accepté comme sujet authentique ; dans le cas contraire, il est rejeté en tant qu'imposteur.

3. Procédé selon une ou plusieurs des revendications précédentes, dans lequel une version non décimée de dircctionlets est utilisée dans le procédé d'extraction des caractéristiques, qui est obtenue en appliquant uniquement un filtrage en utilisant un banc de filtres d'ondelettes 9/7 biorthogonales sans sous-échantillonnage.

4. Procédé selon une ou plusieurs des revendications précédentes, dans lequel l'étape d'extraction des caractéristiques comporte les trois phases suivantes :

   (1) filtrage ou transformation de l'image de l'iris originale en utilisant le banc de filtres d'ondelettes directionnelles 9/7,
   (2) échantillonnage des coefficients d'ondelettes à des coordonnées d'échantillonnage spécifiées, et
   (3) génération d'un code binaire.

5. Procédé selon une ou plusieurs des revendications précédentes, dans lequel la comparaison des caractéristiques comprend un opérateur booléen OU exclusif $\oplus$. Avec deux codes binaires générés à partir de deux images d'iris dans les blocs A et B avec des paramètres égaux $I_{s,o}$ et $J_{s,o}$, le bloc C calcule un score de distance comme la somme des résultats des opérations booléennes OU exclusif appliquées sur les bits dans les deux codes binaires dans la région $k$, l'échelle $s$ et l'orientation $o$.

6. Procédé selon la revendication précédente, dans lequel, pour assurer l'invariance de rotation, le score de distance dans chaque région $k$, échelle $s$ et orientation $o$, est calculé pour différents angles de rotation relatifs des deux images d'iris, ce qui correspond au déplacement angulaire dans le code binaire, et le minimum est pris comme le score de distance $D_{12}(k,s,o)$.

7. Procédé selon la revendication précédente, dans lequel, pour deux codes d'iris $b_{k,s,o}^{(1)}(i,j)$ et $b_{k,s,o}^{(2)}(i,j)$ le score de distance $D_{12}(k,s,o)$ dans la région $k$, l'échelle $s$ et l'orientation $o$ est calculé sous la forme

$$D_{12}(k,s,o) = \min_{0 \leq c_1 \leq \Delta_{i,o}, 0 \leq c_2 \leq \Delta_{i,o}} \sum_{i=0}^{I_{s,o}-1} \sum_{j=0}^{J_{s,o}-\Delta_{s,o}-1} \left( b_{k,s,o}^{(1)}(i,j+c_1) \oplus b_{k,s,o}^{(2)}(i,j+c_2) \right)$$

et le score de distance total est donné par la somme de tout $D_{12}(k,s,o)$, à savoir,

$$D_{12} = \sum_{k \in \{0°,90°,45°,135°\}} \sum_{s \in \{3,4\}} \sum_{o \in \{rad, ang\}} D_{12}(k,s,o)$$

.

8. Procédé selon une ou plusieurs des revendications précédentes, dans lequel, le procédé d'extraction de région de l'iris se base sur le filtrage gaussien appliqué une seule fois sur l'image de l'iris avec une valeur choisie pour le facteur d'échelle σ; le filtre gaussien discrétisé correspondant est obtenu par échantillonnage de la contrepartie continue à des coordonnées entières et troncature à un voisinage de 3σ; le choix de σ dépend de la résolution de l'image.

9. Procédé selon une ou plusieurs des revendications précédentes, dans lequel une estimation des paramètres de la région de l'iris est exécutée en quatre phases :

   1) localisation grossière de la frontière entre la sclère et l'iris,
   2) localisation grossière de la frontière entre la pupille et l'iris,
   3) localisation fine de la frontière entre la papille et l'iris,
   4) localisation fine de la frontière entre la sclère et l'iris.

10. Système d'identification pour la reconnaissance automatique des iris de l'homme, en utilisant des informations provenant d'un dispositif d'extraction de région de l'iris, comprenant les moyens suivants :

- dispositif d'extraction des caractéristiques de l'iris, dans lequel un code binaire est généré, sur la base de directionlets ;
- dispositif de comparaison des caractéristiques de l'iris, dans lequel, sur la base du code binaire généré, un score de distance par rapport à d'autres codes binaires d'iris enregistrés dans une base de données est calculé et, si le score de distance calculé est inférieur à un seuil défini, la reconnaissance est positive.

11. Système selon la revendication de système précédente, dans lequel la comparaison des caractéristiques de l'iris comprend :

- moyen d'identification, dans lequel un sujet testé est comparé par paires à toutes les entrées de la base de données et un ensemble de scores de distance est calculé ; l'identité du sujet testé est déterminée comme l'identité de l'entrée de base de données qui a un score de distance minimal dans l'ensemble ;
- moyen de vérification, dans lequel une hypothèse sur l'identité d'un sujet testé est vérifiée par comparaison à l'entrée de base de données correspondante et, si le score de distance calculé est inférieur à un seuil, le sujet testé est accepté comme sujet authentique ; dans le cas contraire, il est rejeté en tant qu'imposteur.

12. Système selon une ou plusieurs des revendications de système précédentes, dans lequel l'étape d'extraction comporte les trois moyens suivants :

(1) moyen de filtrage ou de transformation pour filtrer l'image d'iris originale en utilisant le banc de filtres d'ondelettes 9/7 directionnelles,
(2) moyen d'échantillonnage pour échantillonner les coefficients d'ondelettes à des coordonnées d'échantillonnage spécifiées, et
(3) moyen de génération pour générer un code binaire.

13. Système selon une ou plusieurs des revendications de système précédentes, dans lequel le dispositif de comparaison des caractéristiques comprend des moyens de calcul pour exécuter un opérateur booléen OU exclusif $\oplus$ et le score de distance est calculé comme la somme des opérations booléennes dans la région $k$, l'échelle $s$ et l'orientation $o$, en particulier dans lequel, avec deux codes binaires générés à partir de deux images d'iris dans les blocs A et B avec des paramètres égaux $I_{s,o}$ et $J_{s,o}$, le bloc C calcule un score de distance, les bits dans les deux codes binaires sont comparés en utilisant l'opérateur booléen OU exclusif $\oplus$ et le score de distance est calculé comme la somme des opérations booléennes dans la région $k$, l'échelle $s$ et l'orientation $o$.

14. Système selon la revendication de système précédente, dans lequel, pour assurer l'invariance de rotation, la distance dans chaque région est calculée pour différents angles de rotation relatifs des deux images d'iris, ce qui correspond au déplacement angulaire dans le code binaire, et le minimum est pris comme le score de distance $D_{12}(k,s,o)$.

15. Système selon la revendication de système précédente, dans lequel, pour deux codes d'iris $b_{k,s,o}^{(1)}(i,j)$ et $b_{k,s,o}^{(2)}(i,j)$, le score de distance $D_{12}(k,s,o)$ est calculé sous la forme

$$D_{12}(k,s,o) = \min_{0 \le c_1 \le \Delta_{s,o}, 0 \le c_2 \le \Delta_{s,o}} \sum_{i=0}^{I_{s,o}-1} \sum_{j=0}^{J_{s,o}-\Delta_{s,o}-1} \left( b_{k,s,o}^{(1)}(i,j+c_1) \oplus b_{k,s,o}^{(2)}(i,j+c_2) \right)$$

et le score de distance total est donné par la somme de tout $D_{12}(k,s,o)$, à savoir,

$$D_{12} = \sum_{k \in \{0^\circ, 90^\circ, 45^\circ, 135^\circ\}} \sum_{s \in \{3,4\}} \sum_{o \in \{rad, ang\}} D_{12}(k,s,o).$$

Figure 1

TS - Test Subject
C - Feature comparison

I. Identification

II. Verification

Figure 2

Figure 3

(a)　　　　　　　　(b)　　　　　　　　(c)

Figure 4

Figure 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4641349 A
- US 5291560 A
- US 5751836 A
- WO 2007118079 A

### Non-patent literature cited in the description

- **Daugman.** High confidence visual recognition of persons by a test of statistical independence. *IEEE Trans. on Pattern Analysis and Machine Intelligence,* November 1993, vol. 15, 1148-1161
- **Daugman.** Statistical richness of visual phase information: update on recognizing persons by iris patterns. *Int. Journal on Computer Vision,* 2001, vol. 45 (1), 25-38
- **Wildes et al.** Iris recognition: an emerging biometric technology. *Proc. of the IEEE,* September 1997, vol. 85, 1348-1363
- **Boles et al.** A human identification technique using images of the iris and wavelet transform. *IEEE Trans. on Signal Processing,* April 1998, vol. 46, 1185-1188
- **Ma et al.** Efficient iris recognition by characterizing key local variations. *IEEE Trans. on Image Processing,* June 2004, vol. 13 (6
- **Park et al.** Iris-based personal authentication using a normalized directional energy feature. *Proc. 4th Int. Conf. Audio- and Video-Based Biometric Person Authentication,* 2003, 224-232
- **J. G. Daugman.** Uncertainty Relation for Resolution in Space, Spatial Frequency, and Orientation Optimized by Two-Dimensional Cortical Filters. *J. Optical Soc. Am.,* 1985, vol. 2 (7), 1160-1169
- **Velisavljevic et al.** Directionlets: anisotropic multi-directional representation with separable filtering. *IEEE Trans. on Image Processing,* July 2006, vol. 15 (7), 1916-1933
- **Velisavljevic et al.** Space-frequency quantization for image compression with directionlets. *IEEE Trans. on Image Processing,* July 2007, vol. 16 (7), 1761-1773
- **Antonini et al.** Image coding using wavelet transform. *IEEE Trans. on Image Processing,* April 1992, vol. 1 (2), 205-220